# EUROPÄISCHE PATENTSCHRIFT

(11) **EP 0 495 166 B1**
(45) Veröffentlichungstag und Bekanntmachung des Hinweises auf die Patenterteilung: **19.10.1994**
(21) Anmeldenummer: 91118963.7
(22) Anmeldetag: 07.11.1991
(51) Int. Cl.: B66C 23/78

(54) **Auf dem Aufbaurahmen eines LKWs angeordneter Systemrahmen**
System frame, arranged on the body frame of a truck
Chassis de système, aménagé sur le chassis d'un camion

(30) Priorität: 17.12.1990 DE 4040267
(43) Veröffentlichungstag der Anmeldung: 22.07.1992
(73) Patentinhaber: MAN Nutzfahrzeuge Aktiengesellschaft, 80976 München (DE); SIEMENS AKTIENGESELLSCHAFT, 80333 München (DE)
(72) Erfinder: Mertens, Armin, W-8000 München 50 (DE); Hinze, Peter, W-8064 Altomünster Randelsried (DE); Ebert, Rudolf, W-8047 Karlsfeld (DE); Grach, Herbert, W-8044 Unterschleissheim (DE)

(56) Entgegenhaltungen:
- DE-A- 2 702 850
- FR-A- 2 417 467

## Beschreibung

Die Erfindung betrifft einen auf dem Aufbaurahmen eines Lkw's angeordneten Systemrahmen zur Aufnahme richtungsveränderbarer, in allen Raumdimensionen ausfahrbarer Aggregate, insbesondere für militärische Nutzung, der in der Breitenerstreckung ausfahrbare Ausschubträger mit an deren Enden befestigten, vertikal absenkbaren Stützen aufweist, wobei die in einem als Ausschubkasten ausgebildeten Querholm des Systemträgers längsverschieblich angeordneten Ausschubträger über eine Signaleinrichtung in eine definierte ausgefahrene Position bringbar sind.

Es sind Systemrahmen mit als Näherungsschalter ausgebildeten Signalisierungseinrichtungen bekannt. Diese sind aber störanfällig, wenn sie elektromagnetischen Wellen ausgesetzt sind. Es ist aber unabdingbar, daß die auf Systemträgern angeordneten militärischen Geräte wie Waffen und Signaleinrichtungen immer zuverlässig einsatzbereit sein müssen. Auch die Anordnung von normalen elektromechanischen Schaltern ist problembehaftet, wenn der Schalter fest dem Ausschubkasten zugeordnet ist; es kann dann der Schaltpunkt durch die erheblichen Fertigungstoleranzen der aus geschweißten Rohren ausgebildeten Ausschubkasten und Ausschubträgerderart verschoben werden, daß ein exakter Schaltpunkt nicht mehr garantiert werden kann.

Der Erfindung liegt die Aufgabe zugrunde, eine sichere, keinen Störeinflüssen unterliegende Signaleinrichtung zum Bestimmen der Endposition der ausgefahrenen Ausschubträger mit den endseitigen Stützen zu finden.

Dies wird dadurch erreicht, daß auf dem Ausschubkasten elektro-mechanische Schalter angeordnet sind, deren Schaltstößel, die Wand des Ausschubkastens durchgreifend, unabhängig von Fertigungs- und Montagetoleranzen im Spiel zwischen Ausschubkasten und Ausschubträgern über in den Ausschubträgern angeordneten Vertiefungen Schaltimpulse auf die Schalter geben. Am Schalter sind ein Schaltstößel und ein Nivellierungsstößel schwimmend, aber unabhängig voneinander verschiebbar, zu Ausschubkasten und Ausschubträgern angeordnet. Wenn solcherart die Signalisierungsnut bzw. Vertiefung unter den Stößeln zu liegen kommt, rollt der Schaltstößel in diese hinein, während der Nivellierungsstößel weiter auf der inneren Oberfläche des Ausschubträgers gleitet. So bewegt sich der Schaltstößel zum Schalter immer um genau das Maß a, unabhängig von den Toleranzen und dem Spiel zwischen Ausschubkasten und Ausschubträgern.

In einer speziellen Ausführungsform sind das Gehäuse des Schalters fest mit dem Nivellierungsstößel und das Schaltelement des Schalters fest mit dem Schaltstößel verbunden. Der Nivellierungsstößel, als Rohr ausgebildet, ist in einem fest mit dem Ausschubkasten verbundenen Lagergehäuse längsverschieblich geführt, und zwischen einem an seinem Ende befestigten Gleitstück und der Unterkante des Lagergehäuses ist eine Druckfeder angeordnet. Zwischen einem Absatz des Schaltstößels, der an seinem freien Ende eine drehbare Rolle aufweist, und einer im Rohrinneren des Nivellierungsstößels vorgesehenen, fest mit diesem verbundenen, den Schaltstößel gleitbar umfassenden Lagerbuchse ist eine Druckfeder angeordnet. Auf diese Weise ist der gesamte Schalter in seiner Betätigungsrichtung schwimmend zu Ausschubkasten und Ausschubträgern angeordnet, so daß Fertigungs- und/oder Montagetoleranzen zwischen den gegeneinander verschiebbaren Elementen nicht in den Schaltweg eingehen.

Nach einer weiteren Ausbildungsform der Erfindung ist der Schalter mit seinem Schaltelement, das an seinem Ende eine drehbare Rolle aufweist, quer zum Schaltstößel angeordnet, und es ist am oberen Ende des Schaltstößels eine Schrägfläche vorgesehen, an der sich die Rolle des Schaltelementes abwälzt. Weiterhin weist der Nivellierungsstößel an seinem oberen Ende bis etwa in der Ebene der Schrägfläche des Schaltstößels eine schlitzartige Öffnung zum Durchtritt der Rolle auf und das obere Stößelende des Nivellierungsstößels ist über einen Blechwinkel mit dem Schalter verbunden. Auf diese Weise ergibt sich eine besonders flache Ausbildung der Signalisierungseinrichtung.

Die Erfindung ist in zwei Ausführungsbeispielen dargestellt.

Es zeigen:
- Fig. 1: eine perspektivische Darstellung eines Systemrahmens zum Aufbau auf einen Aufbaurahmen eines Lkw's,
- Fig. 2: eine dem Systemrahmen zugeordnete Ausschubeinheit mit Signaleinrichtung,
- Fig. 3: eine Signaleinrichtung im Schnitt,
- Fig. 4: eine Variante der Signaleinrichtung gemäß Fig. 3 im Schnitt,
- Fig. 5: einen Ausschnitt von Fig. 4 im Seitenschnitt.

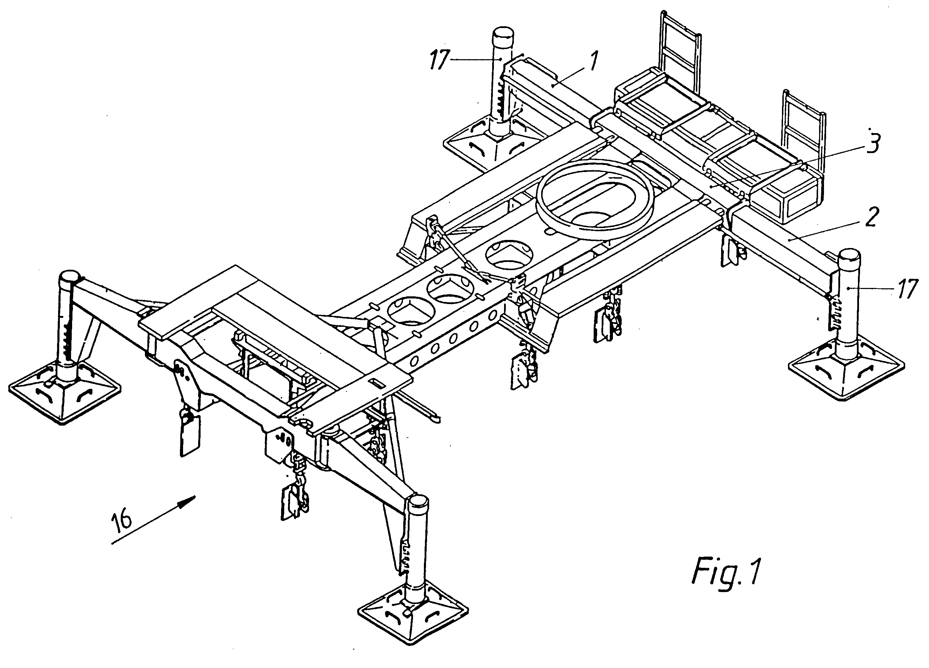

Fig. 1 zeigt einen Systemrahmen 16, wie er auf dem Aufbaurahmen eines Lkw's aufgebaut werden kann. Der nicht in Details beschriebene Systemrahmen 16 weist an seinen Enden Ausschubkästen 3 auf, in denen Ausschubträger 1,2 längsverschieblich angeordnet sind, an deren Enden Stützen 17 fest angebracht sind, die bei ausgefahrenen Ausschubträgern auf den Boden absenkbar sind, so daß die auf den Systemträgern befestigten militärischen Aggregate wie Raketenwerfer oder Signaleinrichtungen auch weit seitlich ausladbar sind, ohne daß die Kippsicherheit des Lkw's gefährdet ist.

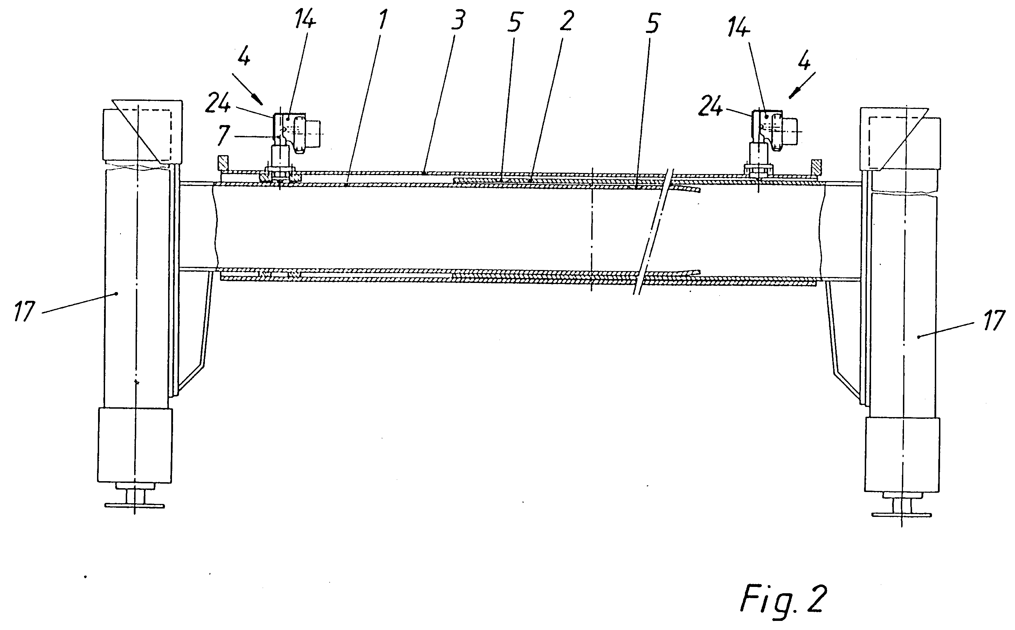

Fig. 2 zeigt die Ausschubeinheit mit dem Ausschubkasten 3 in dem teleskopartig die Ausschubträger 1 und 2 mit den endseitigen vertikalen Stützen 17 angeordnet sind, die bei Bedarf am Boden abstützbar sind. Auf dem Ausschubkasten 3 sind auf beiden Seiten je eine Signaleinrichtung 4 angeordnet. Diese besteht aus einem Schalter 14 und einem Nivellierungsstößel 7, die durch einen Blechwinkel 24 miteinander verbunden sind. Im äußeren Bereich der Ausschubträger sind Vertiefungen bzw. Schaltnuten 5 vorgesehen.

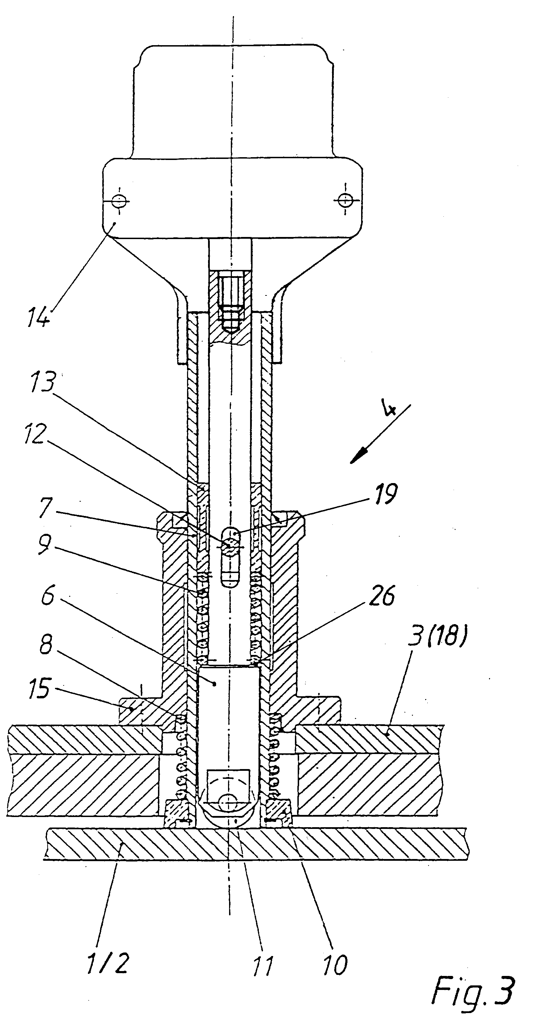

Fig. 3 zeigt eine Signaleinrichtung 4 im Schnitt. Das Gehäuse des Schalters 14 ist mit einem Nivellierungsstößel 7 fest verbunden. Der Nivellierungsstößel 7 ist gleitbar in einem Lagergehäuse 15 angeordnet, das fest mit dem Ausschubkasten 3 verbunden ist. Am unteren Ende des Nivellierungsstößels 7 ist ein Gleitstück 10 angebracht, das sich auf den Außenwandungen der Ausschubträger 1,2 abstützt. Zwischen dem Gleitstück 10 und der Unterkante des Lagergehäuses 15 ist eine Druckfeder 8 mit Vorspannung eingespannt. Mit dem Schaltelement des Schalters 14 ist ein Schaltstößel 6 fest verbunden. Der Schaltstößel 6 weist an seinem unteren Ende eine drehbare Rolle 11 auf, die sich auf der äußeren Wandung der Ausschubträger 1,2 abstützt. Der Schaltstößel 6 führt durch das Rohrinnere des Nivellierstößels 7. Geführt ist der Schaltstößel 6 in der Lagerbuchse 13, die über einen Stift 12 fest mit dem Nivellierstößel 7 verbunden ist. Der Stift 12 kann in einem Langloch 19 des Schaltstößels 6 gleiten. Zwischen einem Absatz 26 des Schaltstößels 6 und der Unterkante der Lagerbuchse 13 ist eine Druckfeder 9 mit Vorspannung angeordnet.

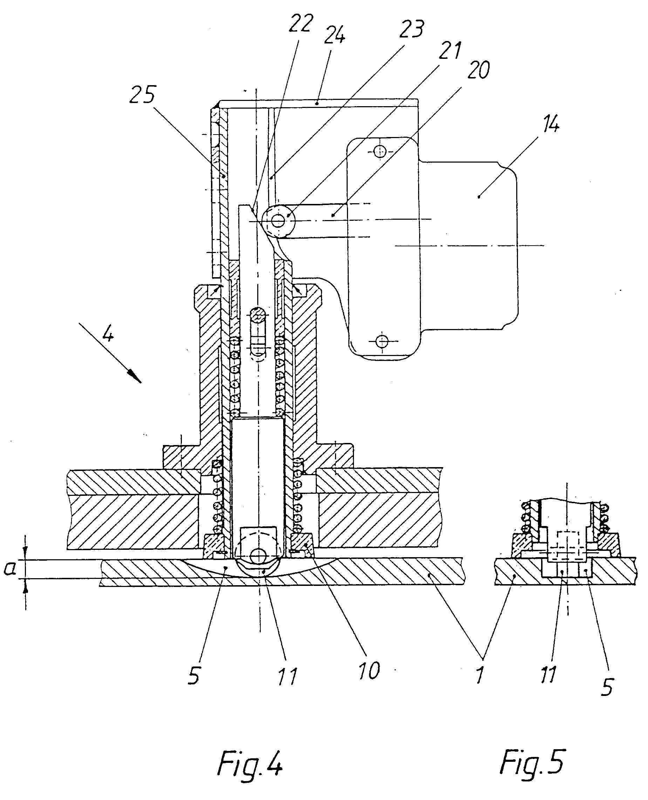

Fig. 4 zeigt eine Variante der Signaleinrichtung nach Fig. 3. Hier ist der Schalter 14 mit seinem Schaltelement 20 quer zum Schaltstößel 6 angeordnet. Das Schaltelement 20 des Schalters 14 weist an seinem Ende eine drehbare Rolle 21 auf, die an einer am oberen Ende des Schaltstößels 6 angeordneten Schrägfläche 22 abrollt. Die Rolle 21 kann durch einen im oberen Teil des Nivellierungsstößels 6 angebrachten schlitzartigen Öffnung durchtreten, um die Schrägfläche zu beaufschlagen. Der obere Teil 25 des Nivellierungsstößels 7 ist über einen Winkel 24 mit dem Schalter 14 fest verbunden. Aus der Fig. 4 ist ersichtlich, wie der Schaltstößel 6 mit seiner Rolle 11 in die Vertiefung bzw. Signalisierungsnut 5 eintritt und somit eine sichere Signalabgabe auslöst.

Fig. 5 zeigt die Kontaktstelle im Seitenschnitt, wobei ersichtlich ist, daß das Gleitstück 10 nach wie vor auf der Innenwand des Ausschubträgers 1 anliegt, während die dem Schaltstößel 6 zugeordnete Rolle 11 in der Vertiefung einliegt. Es ist also nur der gewollte Tiefenunterschied der Nute 5 für die Signalabgabe maßgebend, wobei alle Toleranzen zwischen Ausschubkasten und Ausschubträger außer Betrachtbleiben.

## Patentansprüche

1. Auf dem Aufbaurahmen eines Lkw's angeordneter Systemrahmen (16) zur Aufnahme richtungsveränderbarer, in allen Raumdimensionen ausfahrbarer Aggregate, insbesondere für militärische Nutzung, der in der Breitenerstreckung ausfahrbare Ausschubträge (2,5) mit an deren Enden befestigten, vertikal absenkbaren Stützen (17) aufweist, wobei die in einem als Ausschubkasten (3) ausgebildeten Querholm des Systemrahmens längsverschieblich angeordneten Ausschubträger (2,5) über eine Signaleinrichtung (4) in eine definierte ausgefahrene Position bringbar sind, dadurch gekennzeichnet, daß auf dem Ausschubkasten (3) elektro-mechanische Schalter (14) angeordnet sind, deren Schaltstößel (6), die Wand (18) des Ausschubkastens (3) durchgreifend, unabhängig von Fertigungs- und Montagetoleranzen im Spiel zwischen Ausschubkasten (3) und Ausschubträgern (1,2) über in den Ausschubträgern (1, 2) angeordnete Vertiefungen (5) Schaltimpulse auf die Schalter (14) geben.

2. Systemrahmen nach Anspruch 1, dadurch gekennzeichnet, daß am Schalter (14) ein Nivellierungsstößel (7) und ein Schaltstößel (6) schwimmend, aber unabhängig voneinander verschieblich, zu Ausschubkasten (3) und Ausschubträgern (1,2) angeordnet sind.

3. Systemrahmen nach Anspruch 1 oder 2, dadurch gekennzeichnet, daß
- das Gehäuse des Schalters (14) fest mit dem Nivellierungsstößel (7) und das Schaltelement des Schalters (14) fest mit dem Schaltstößel (6) verbunden sind,
- der Nivellierungsstößel (7), als Rohr ausgebildet, in einem fest mit dem Ausschubkasten (3) verbundenen Lagergehäuse (15) geführt ist und zwischen einem an seinem Ende befestigten Gleitstück (10) und der Unterkante des Lagergehäuses (15) eine Druckfeder (8) angeordnet ist und
- zwischen einem Absatz (26) des Schaltstößels (6), der an seinem freien Ende eine drehbare Rolle (11) aufweist, und einer im Rohrinneren des Nivellierungsstößels (7) vorgesehenen, fest mit diesem verbundenen, den Schaltstößel (6) gleitbar umfassenden Lagerbuchse (13) eine Druckfeder (9) angeordnet ist.

4. Systemrahmen nach den Ansprüchen 1 bis 3, dadurch gekennzeichnet, daß der Nivellierungsstößel (7) und die Lagerbuchse (13) mittels eines Stiftes (12) verbunden sind, der in einem Langloch (19) des Schaltstößels (6) geführt ist.

5. Systemrahmen nach einem oder mehreren der Ansprüche 1 bis 4, dadurch gekennzeichnet, daß der Schalter (14) mit seinem Schaltelement (20), das an seinem Ende eine drehbare Rolle (21) aufweist, quer zum Schaltstößel (6) angeordnet ist und am oberen Ende des Schaltstößels (6) eine Schrägfläche (22) vorgesehen ist, an der sich die Rolle (21) des Schaltelementes (20) abwälzt.

6. Systemrahmen nach Anspruch 5, dadurch gekennzeichnet, daß der Nivellierungsstößel (7) an seinem oberen Ende bis etwa in der Ebene der Schrägfläche (22) des Schaltstößels (6) eine schlitzartige Öffnung (23) zum Durchschritt der Rolle (21) aufweist und das obere Nivellierungsstößelende (25) über einen Blechwinkel (24) mit dem Schalter 14 verbunden ist.

## Claims

1. A system frame (16) disposed on the body frame of a truck for receiving directionally variable units extendable in all spatial dimensions, in particular for military use, which system frame has slide-out carriers (2, 5) extendable widthwise and having vertically lowerable supports (17) fastened to the ends thereof, the slide-out carriers (2, 5) disposed in a longitudinally displaceable manner in a transverse spar of the system frame designed as a slide-out box (3) being movable by means of a signal device (4) into a defined extended position, characterized in that electromechanical switches (14) are disposed on the slide-out box (3) and have contact plungers (6) engaging through the wall (18) of the slide-out box (3) and supplying operating pulses to the switches (14) via recesses (5) disposed in the slide-out carriers (1, 2) independently of manufacturing and assembly tolerances in the play between slide-out box (3) and slide-out carriers (1, 2).

2. A system frame according to claim 1, characterized in that a levelling plunger (7) and a contact plunger (6) are disposed on the switch (14) in a floating manner but are displaceable independently of one another relative to slide-out box (3) and slide-out carriers (1, 2).

3. A system frame according to claim 1 or 2, characterized in that
- the housing of the switch (14) is firmly connected to the levelling plunger (7) and the contact element of the switch (14) is firmly connected to the contact plunger (6).
- the levelling plunger (7) in the form of a tube is guided in a bearing housing (15) firmly connected to the slide-out box (3) and a pressure spring (8) is disposed between a sliding piece (10) fastened to the end of the levelling plunger and the bottom edge of the bearing housing (15) and
- a pressure spring (9) is disposed between a shoulder (26) of the contact plunger (6), which has a rotatable roller (11) at its free end, and a bearing bush (13) which is provided inside the tube of the levelling plunger (7), is firmly connected to the latter and slidably embraces the contact plunger (6).

4. A system frame according to claims 1 to 3, characterized in that the levelling plunger (7) and the bearing bush (13) are connected by means of a pin (12) which is guided in an oblong hole (19) of the contact plunger (6).

5. A system frame according to one or more of claims 1 to 4, characterized in that the switch (14) with its contact element (20), which has a rotatable roller (21) at its end, is disposed at right angles to the contact plunger (6) and there is provided at the top end of the contact plunger (6) an oblique surface (21), on which the roller (21) of the contact element (20) rolls.

6. A system frame according to claim 5, characterized in that the levelling plunger (7) has, at its top end up to approximately the plane of the oblique surface (22) of the contact plunger (6), a slot-like opening (23) for passage of the roller (21) and the top levelling plunger end (25) is connected by a sheet-metal angle (24) to the switch (14).

## Revendications

1. Châssis de système (16) monté sur le châssis d'un camion pour recevoir des unités déployables dans toutes les directions de l'espace, avec changement de direction, notamment à usage militaire, comprenant des poutres télescopiques (2, 5) se déployant dans le sens de la largeur, et ayant à leurs extrémités des appuis (17) verticaux susceptibles d'être abaissés, les poutres télescopiques (2, 5) logées coulissantes longitudinalement dans une traverse en forme de caisson télescopique (3) peuvent être conduites par une installation de signalisation (4) dans une position déployée, définie précisément, châssis caractérisé en ce que des commutateurs électromécaniques (14) équipent le caisson télescopique (3), commutateur dont les poussoirs (6) traversent la paroi (18) du caisson télescopique (3) et, indépendamment des tolérances de fabrication et de montage du jeu entre le caisson télescopique (3) et les poutres télescopiques (1, 2), donnent des impulsions de commutation au commutateur (14) grâce à des cavités (5) prévues dans les poutres télescopiques (1, 2).

2. Châssis de système selon la revendication 1, caractérisé en ce qu'un poussoir de mise à niveau (7) et un poussoir de commutation (6) sont montés flottants sur le commutateur (14), mais de manière coulissante indépendamment l'un de l'autre, par rapport au caisson télescopique (3) et aux poutres télescopiques (2, 3).

3. Châssis de système selon la revendication 1 ou 2, caractérisé en ce que :
- le boîtier du commutateur (14) est relié solidairement au poussoir de mise à niveau (7) et l'élément de commutation du commutateur (14) est relié solidairement au poussoir de commutation (6),
- le poussoir de mise à niveau (7) est en forme de tube guidé dans un boîtier de palier (15) relié solidairement au caisson télescopique (3) et entre un coulisseau (10) solidaire d'une extrémité et l'arête inférieure du boîtier de palier (15), un ressort de compression (8) est mis en place, et
- entre un épaulement (26) du poussoir de commutation (6) qui comporte un galet libre en rotation (11) à son extrémité libre et une douille de palier (13) prévue à 11 intérieur du tube du poussoir de mise à niveau (7), en étant solidaire de celui-ci et en entourant en coulissement le poussoir de commutation (6),se trouve un ressort de compression (9).

4. Châssis de système selon les revendications 1 à 3, caractérisé en ce que le poussoir de mise à niveau (7) et la douille de palier (13) sont reliés par un goujon (12) guidé dans un trou oblong (19) du poussoir de commutation (6).

5. Châssis de système selon l'une ou plusieurs des revendications 1 à 4, caractérisé en ce que le commutateur (14) et son élément de commutation (20) dont l'extrémité est munie d'un galet de rotation (21), est prévu transversalement au poussoir de commutation (6) et à l'extrémité supérieure du poussoir de commutation (6), se trouve une surface inclinée (22) sur laquelle roule le galet (21) de l'élément de commutation (20).

6. Châssis de système selon la revendication 5, caractérisé en ce que le poussoir de mise à niveau (7) comporte à son extrémité supérieure, sensiblement jusqu'au niveau du plan de la surface inclinée (22) du poussoir de commutation (6), une ouverture (23) en forme de fente pour le passage du galet (21) et l'extrémité supérieure (25) du poussoir de mise à niveau est reliée au commutateur (14) par une cornière en tôle (24).
